# EUROPÄISCHE PATENTSCHRIFT

(11) **EP 1 190 171 B1**
(45) Veröffentlichungstag und Bekanntmachung des Hinweises auf die Patenterteilung: **09.03.2005**
(21) Anmeldenummer: 00935132.1
(22) Anmeldetag: 27.05.2000
(51) Int. Cl.: F02M 35/12

(54) **LUFTANSAUGANLAGE FÜR EINE BRENNKRAFTMASCHINE**
AIR-INTAKE SYSTEM FOR AN INTERNAL COMBUSTION ENGINE
SYSTEME D'ASPIRATION D'AIR POUR MOTEUR A COMBUSTION INTERNE

(30) Priorität: 09.06.1999 DE 19926135
(43) Veröffentlichungstag der Anmeldung: 27.03.2002
(73) Patentinhaber: Volkswagen Aktiengesellschaft, 38436 Wolfsburg (DE)
(72) Erfinder: BECKER, Norbert, 38518 Gifhorn (DE)
(86) Internationale Anmeldenummer: PCT/EP2000/004850
(87) Internationale Veröffentlichungsnummer: WO 2000/077387

(56) Entgegenhaltungen:
- EP-A- 0 242 797
- DE-A- 19 811 051
- DE-U- 8 715 030
- FR-A- 1 185 974
- US-A- 2 886 129
- US-A- 2 995 126
- US-A- 3 203 158
- US-A- 5 307 771
- PATENT ABSTRACTS OF JAPAN vol. 10, no. 246 (M-510) [2302], 23. August 1986 (1986-08-23) & JP 61 076757 A (KAWASAKI), 19. April 1986 (1986-04-19)

## Beschreibung

Die Erfindung betrifft eine Luftansauganlage für eine Brennkraftmaschine gemäß dem Oberbegriff des Anspruchs 1.

In der modernen Entwicklung von Brennkraftmaschinen für Kraftfahrzeuge spielt eine Geräuschreduzierung zur Erhöhung des Fahrkomforts und zur Verringerung der Geräuschemission an die Umwelt eine immer größere Rolle. So ist es beispielsweise aus Patent Abstracts of Japan, JP 07-027028 bekannt, zur Geräuschreduzierung am Luftfilter ein zusätzliches Ansaugrohr mit Ventil zur Strömungsregulierung anzuordnen. Diese Anordnung läßt jedoch nur eine begrenzte Reduktion der Geräuschentwicklung zu.

Aus der FR 1 185 974 ist ein Luftfilter für eine Brennkraftmaschine bekannt, bei dem in einem Gehäuse eine Luftleiteinrichtung für eine radiale Strömung sorgt.

Die US 5 307 771 beschreibt einen Luftfilter für eine Brennkraftmaschine, welcher direkt an einem Vergaser befestigt ist. In einem Ansaugschnorchel ist eine Doppelklkappe vorgesehen, welche diesen wahlweise öffnet oder schließt. Bei geschlossener Doppelklappe strömt Ansauglauf über einen zusätzlichen Schlitz in einem Seitenbereich des Luftfiltergehäuses zum Filtereinsatz hin.

Aus der US 2 886 129 ist eine Kombination aus Luftfilter und Geräuschminderer für eine Brennkraftmaschine bekannt, welcher trompetenartige Ansaugtrichter aufweist.

Der vorliegenden Erfindung liegt die Aufgabe zugrunde, eine verbesserte Luftansauganlage der obengenannten Art zur Verfügung zu stellen, wobei die obengenannten Nachteile überwunden werden und eine wirksame Reduzierung der Geräuschentwicklung ohne negative Beeinflussung der Leistung der Brennkraftmaschine erzielt wird.

Diese Aufgabe wird erfindungsgemäß durch eine Luftansauganlage der o.g. Art mit den in Anspruch 1 gekennzeichneten Merkmalen gelöst. Vorteilhafte Ausgestaltungen der Erfindung sind in den abhängigen Ansprüchen angegeben.

Dazu ist es erfindungsgemäß vorgesehen, daß der Rohluftraum als vom Luftfiltergehäuse getrennter Ansaugbehälter ausgebildet und stromauf des Luftfiltergehäuses angeordnet ist, daß der Rohluftraum mittels einer Abtrennung in ein Rahlufteintrittsvoiumen und ein Rohluftaustrittsvolumen unterteilt ist, wobei ein Durchlaßquerschnitt für Rohluft an der Abtrennung von dem Rohlufteintrittsvolumen in das Rohluftaustrittsvolumen veränderbar ist, und daß die Abtrennung wenigstens zwei Diffusoren mit unterschiedlichem Öffnungsquerschnitt aufweist, welche das Rohtufteintrittsvotumen mit dem Rohluftaustrittsvolumen strömungsmäßig verbinden, wobei der Diffusor mit größerem Öffnungsquerschnitt eine Vorrichtung zum wahlweise öffnen bzw. Verschließen dieses Diffusors aufweist.

Dies hat den Vorteil, daß das Volumen der einströmenden Luft und damit eine Geräuschentwicklung in der Luftansauganlage derart steuerbar ist, daß sich eine minimale Geräuschentwicklung ergibt.

Um der Brennkraftmaschine je nach Betriebszustand eine ausreichende Luftmenge bei minimaler Geräuschentwicklung in der Luftansauganlage zur Verfügung zu stellen, ist der Durchlaßquerschnitt für Rohluft an der Abtrennung in Abhängigkeit von einer Drehzahl der Brennkraftmaschine veränderbar. Bei niedrigen Drehzahlen benötigt die Brennkraftmaschine weniger Luft, so daß der Durchlaßquerschnitt an der Abtrennung verringert werden kann. Hierdurch strömt ein geringeres Luftvolumen durch die Luftansauganlage, was zu einer entsprechend reduzierten Geräuschentwicklung in der Luftansauganlage führt. Bei hohen Drehzahlen wird der Durchlaßquerschnitt erweitert, um einen erhöhten Luftbedarf der Brennkraftmaschine zu decken. Die hierdurch erhöhte Geräuschentwicklung in der Luftansauganlage ist im hohen Drehzahlbereich unkritisch, da hier das Motorgeräusch die Luftansauggeräusche übertönt.

Zweckmäßigerweise ist die Abtrennung als eine Gehäusewand des Luftfiltergehäuses ausgebildet.

In einer bevorzugten Ausführungsform ist der Ansaugbehälter für eine einfache Montage beispielsweise zweiteilig ausgebildet.

Zweckmäßigerweise ist ein Steuergerät vorgesehen, welches die Vorrichtung zum wahlweise öffnen bzw. Verschließen in Abhängigkeit von der Drehzahl der Brennkraftmaschine öffnet und schließt.

Zum Zuführen von Rohluft an das Rohlufteintrittsvolumen ist ein mit dem Rohlufteintrittsvolumen verbundener Ansaugschnorchel vorgesehen, wobei im Ansaugschnorchel ein Schneesieb angeordnet ist.

Zum wahlweise zuführen von vorgewärmter Rohluft ist ein mit dem Rohlufteintrittsvolumen verbundener Ansaugstutzen für vorgewärmte Rohluft vorgesehen, welcher eine Klappe zum wahlweise Öffnen oder Verschließen aufweist. Hierbei ist bevorzugt ein elastisches Mittel, insbesondere eine Feder, vorgesehen, welches die Klappe in Schließrichtung derart mit Kraft beaufschlagt, daß sich die Klappe bei einem vorbestimmten Unterdruck im Rohlufteintrittsvolumen gegen die Kraft des elastischen Mittels öffnet.

Erfindungsgemäß ist eine Brennkraftmaschine, insbesondere für ein Kraftfahrzeug, bzw. ein Kraftfahrzeug mit Brennkraftmaschine mit einer zuvor beschriebenen Luftansauganlage ausgestattet.

Weitere Merkmale, Vorteile und vorteilhafte Ausgestaltungen der Erfindung ergeben sich aus den abhängigen Ansprüchen, sowie aus der nachstehenden Beschreibung der Erfindung anhand der beigefügten Zeichnungen. Diese zeigen in
- Fig. 1: eine bevorzugte Ausführungsform einer erfindungsgemäßen Luftansauganlage in seitlicher Schnittansicht und
- Fig. 2: in teilweise geschnittener Aufsicht.

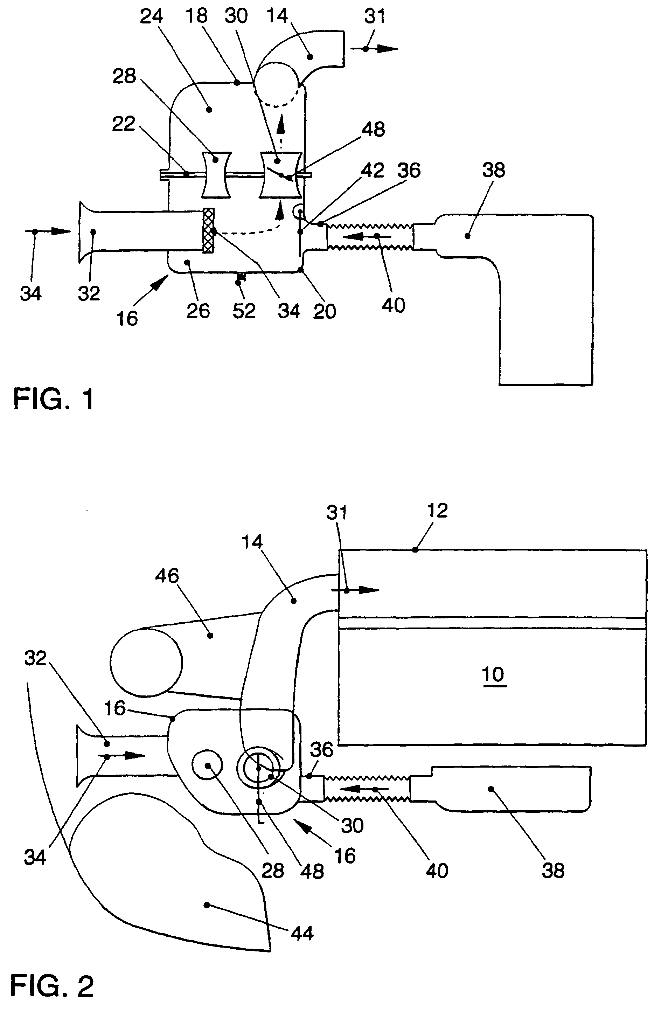

Die in Fig. 1 und 2 dargestellte bevorzugte Ausführungsform einer erfindungsgemäßen Luftansauganlage für eine Brennkraftmaschine 10 umfaßt ein Luftfiltergehäuse 12 mit einer Rohluftzuführung 14 und einem mit der Rohluftzuführung 14 verbundenen Ansaugbehälter 16. Der Ansaugbehälter 16 weist ein Oberteil 18 und ein Unterteil 20 auf, welche mit einer dazwischen liegenden Abtrennung 22 in Form einer Gehäusewandung einen Rohluftraum in ein Rohlufteintrittsvolumen 26 und ein Rohluftaustrittsvolumen 24 unterteilen. In der Abtrennung 22 sind zwei Diffusoren 28 und 30 angeordnet, welche durch die Abtrennung 22 hindurch das Rohlufteintrittsvolumen 26 mit dem Rohluftaustrittsvolumen 24 derart strömungsmäßig verbinden, daß Rohluft von dem Rohlufteintrittsvolumen 26 durch die Diffusoren 28 und 30 überströmen kann. Die Rohluftzuführung 14 ist mit dem Rohluftaustrittsvolumen 24 verbunden, so daß Rohluft 31 aus dem Rohluftaustrittsvolumen 24 über die Rohluftzuführung 14 durch das Luftfiltergehäuse 12 und anschließend als Reinluft in die Brennkraftmaschine strömt.

Femer ist ein mit dem Rohlufteintrittsvolumen 26 verbundener Ansaugschnorchel 32 derart vorgesehen, daß Umgebungsluft 33 als Rohluft dem Rohlufteintrittsvolumen 26 zuströmt. Der Ansaugschnorchel 32 weist ein Schneesieb 34 auf. Darüber hinaus ist ein mit dem Rohlufteintrittsvolumen 26 verbundener Ansaugstutzen 36 vorgesehen, durch weichen in das Rohlufteintrittsvolumen 26 Umgebungsluft einströmt, welche an einem Warmluftblech 38 eines nicht dargestellten Abgaskrümmers vorbei geleitet ist, so daß vorgewärmte Rohluft 40 in das Rohlufteintrittsvolumen 26 einströmt. Der Ansaugstutzen 36 ist mit einer federbelasteten Unterdruckklappe 42 ausgestattet, welche zunächst den Ansaugstutzen 36 verschließt, so daß Rohluft ausschließlich über den Ansaugschnorchel 32 angesaugt wird. Sofern das Schneesieb 34 verstopft ist, ergibt sich ein entsprechender Unterdruck im Rohlufteintrittsvolumen 26, welcher gegen die Federvorspannung der Unterdruckklappe 42 diese Öffnet, so daß vorgewärmte Rohluft 40 in das Rohlufteintrittsvolumen 26 einströmt. Fig. 2 verdeutlicht eine beispielhafte Einbaulage in einem Kraftfahrzeug benachbart zu einem Scheinwerfer 44 und einem Motorträger 46.

Der erste Diffusor 28 hat einen kleineren Öffnungsquerschnitt und ist permanent offen. Der zweite Diffusor 30 hat einen größeren Öffnungsquerschnitt als der erste Diffusor 28 und ist mit einer Schaltklappe 48 ausgestattet, welche den zweiten Diffusor 30 wahlweise öffnet oder verschließt Ein entsprechendes, nicht dargestelltes Steuergerät, beispielsweise das Motorsteuergerät, öffnet bzw. schließt die Schaltklappe 48 in Abhängigkeit von einer Drehzahl der Brennkraftmaschine 10. Bei niedriger Drehzahl wird die Schaltklappe 48 geschlossen, so daß nur über den kleinen Querschnitt des ersten Diffusors 28 Rohluft aus dem Rohlufteintrittsvolumen 26 in das Rohluftaustrittsvolumen 24 überströmt. Durch die reduzierte Rohluftströmung ergibt sich eine reduzierte Geräuschentwicklung in der Luftansauganlage. Der geringere Querschnitt für die Luftströmung ist unkritisch, da die Brennkraftmaschine bei niedriger Drehzahl weniger Luft benötigt.

Bei einer erhöhten Drehzahl von beispielsweise 5.000 U/min und höher öffnet das Steuergerät die Schaltklappe 48, so daß Rohluft über den vergrößerten Querschnitt beider Diffusoren 28, 30 zusammen aus dem Rohlufteintrittsvolumen 26 in das Rohluftaustrittsvolumen 24 überströmt. Hierdurch wird die Brennkraftmaschine 10 mit ausreichend Luft für einen ordnungsgemäßen Betrieb versorgt. Die sich durch die größere Luftströmung in der Luftansauganlage ergebende höhere Geräuschentwicklung ist nunmehr unkritisch, da das Motorengeräusch der höhertourig laufenden Brennkraftmaschine das Geräusch aus der Luftansauganlage ohnehin übertönt.

An einer Unterseite 50 des Ansaugbehätters 16, also am Unterteil 20, ist femer eine Wasserablauföffnung 52 für Kondenswasser vorgesehen. Der Ansaugbehälter 16 ist als bzgl. des Luftfiltergehäuses 12 separates Bauteil ausgeführt und gemäß dem vorhandenen Bauraum ausgebildet. Der Ansaugschnorchel weist einen möglichst großen Querschnitt von beispielsweise 45 mm oder mehr auf. Alternativ ist der Ansaugbehälter 16 in das Luftfiltergehäuse 12 integriert, wobei dieser dann einen Rohluftraum des Luftfiltergehäuses 12 ausbildet.

## Patentansprüche

1. Luftansauganlage für eine Brennkraftmaschine (10) mit einem Luftfilter, welcher in einem Luftfiltergehäuse (12) einen Rohluftraum, einen mit der Brennkraftmaschine (10) verbundenen Reinluftraum und einen zwischen Rohluftraum und Reinluftraum angeordneten Filtereinsatz aufweist, wobei der Rohluftraum mittels einer Abtrennung (22) in ein Rohlufteintrittsvolumen (26) und ein Rohluftaustrittsvolumen (24) unterteilt ist, wobei ein Durchlaßquerschnitt für Rohluft an der Abtrennung (22) von dem Rohlufteintrittsvolumen (26) in das Rohluftaustrittsvolumen (24) veränderbar ist, **dadurch gekennzeichnet, daß** der Rohluftraum als vom Luftfiltergehäuse (12) getrennter Ansaugbehälter (16) ausgebildet und stromauf des Luftfiltergehäuses (12) angeordnet ist, und daß die Abtrennung (22) wenigstens zwei Diffusoren (28, 30) mit unterschiedlichem Öffnungsquerschnitt aufweist, welche das Rohlufteintrittsvolumen (26) mit dem Rohluftaustrittsvolumen (24) strömungsmäßig verbinden, wobei der Diffusor (30) mit größerem Öffnungsquerschnitt eine Vorrichtung (48) zum wahlweise öffnen bzw. Verschließen dieses Diffusors (30) aufweist.

2. Luftansauganlage nach Anspruch 1, **dadurch gekennzeichnet, daß** der Durchlaßquerschnitt für Rohluft an der Abtrennung (22) in Abhängigkeit von einer Drehzahl der Brennkraftmaschine (10) veränderbar ist.

3. Luftansauganlage nach Anspruch 1 oder 2, **dadurch gekennzeichnet, daß** der Durchlaßquerschnitt für Rohluft an der Abtrennung (22) in Abhängigkeit von einer Drehzahl der Brennkraftmaschine (10) derart veränderbar ist, daß bei niedrigen Drehzahlen der Brennkraftmaschine (10) der Durchlaßquerschnitt verringert und bei hohen Drehzahlen der Brennkraftmaschine (10) der Durchlaßquerschnitt vergrößert ist.

4. Luftansauganlage nach einem der vorhergehenden Ansprüche, **dadurch gekennzeichnet, daß** die Abtrennung (22) als eine Gehäusewand des Luftfiltergehäuses (12) ausgebildet ist.

5. Luftansauganlage nach einem der vorhergehenden Ansprüche, **dadurch gekennzeichnet, daß** der Ansaugbehälter (16) zweiteilig ausgebildet ist.

6. Luftansauganlage nach einem der vorhergehenden Ansprüche, **dadurch gekennzeichnet, daß** die Vorrichtung (48) zum wahlweise öffnen bzw. Verschließen dieses größeren Diffusors (30) eine Schaltklappe ist.

7. Luftansauganlage nach einem der vorhergehenden Ansprüche, **dadurch gekennzeichnet, daß** ein Steuergerät vorgesehen ist, welches die Vorrichtung (48) zum wahlweise öffnen bzw. Verschließen des Diffusors (30) in Abhängigkeit von der Drehzahl der Brennkraftmaschine (10) öffnet und schließt.

8. Luftansauganfage nach einem der vorhergehenden Ansprüche, **dadurch gekennzeichnet, daß** ein mit dem Rohlufteintrittsvolumen (26) verbundener Ansaugschnorchel (32) vorgesehen ist.

9. Luftansauganlage nach Anspruch 8, **dadurch gekennzeichnet, daß** im Ansaugschnorchel (32) ein Schneesieb (34) angeordnet ist.

10. Luftansauganlage nach einem der vorhergehenden Ansprüche, **dadurch gekennzeichnet, daß** ein mit dem Rohlufteintrittsvolumen (26) verbundener Ansaugstutzen (36) für vorgewärmte Rohluft (40) vorgesehen ist, welcher eine Klappe (42) zum wahlweise Öffnen oder Verschließen aufweist.

11. Luftansauganlage nach Anspruch 10, **dadurch gekennzeichnet, daß** ein elastisches Mittel, insbesondere eine Feder, vorgesehen ist, welches die Klappe (42) in Schließrichtung derart mit Kraft beaufschlagt, daß sich die Klappe (42) bei einem vorbestimmten Unterdruck im Rohlufteintrittsvolumen (26) gegen die Kraft des elastischen Mittels öffnet.

12. Brennkraftmaschine (10), insbesondere für ein Kraftfahrzeug, mit einer Luftansauganlage, **dadurch gekennzeichnet, daß** die Luftansauganlage gemäß wenigstens einem der vorhergehenden Ansprüche ausgebildet ist.

13. Kraftfahrzeug mit einer Brennkraftmaschine (10), welche eine Luftansauganlage aufweist, **dadurch gekennzeichnet, daß** die Luftansauganlage gemäß wenigstens einem der Ansprüche 1 bis 11 ausgebildet ist.

## Claims

1. Air-intake system for an internal combustion engine (10) having an air filter which has a raw air space, a clean air space connected to the internal combustion engine (10) and a filter insert, arranged between the raw air space and clear air space, in an air filter housing (12), wherein the raw air space is divided into a raw air inlet volume (26) and a raw air outlet volume (24) by means of a partition (22) and wherein a through-flow cross section for raw air at the partition (22) from the raw air inlet volume (26) into the raw air outlet volume (24) can be varied, **characterized in that** the raw air space is embodied as an intake container (16) which is separated from the air filter housing (12) and is arranged upstream of the air filter housing (12), and **in that** the partition (22) has at least two diffusers (28, 30) with a different opening cross section, which diffusers (28, 30) form a flow connection between the raw air inlet volume (26) and the raw air outlet volume (24), wherein the diffuser (30) with the larger opening cross section has a device (48) for optionally opening or closing this diffuser (30).

2. Air-intake system according to Claim 1, **characterized in that** the through-flow cross section for raw air at the partition (22) can be varied as a function of a rotational speed of the internal combustion engine (10).

3. Air-intake system according to Claim 1 or 2, **characterized in that** the through-flow cross section for raw air at the partition (22) can be varied as a function of a rotational speed of the internal combustion engine (10) in such a way that at low rotational speeds of the internal combustion engine (10) the through-flow cross section is reduced and at high rotational speeds of the internal combustion engine (10) the through-flow cross section is increased.

4. Air-intake system according to one of the preceding claims, **characterized in that** the partition (22) is embodied as a housing wall of the air filter housing (12).

5. Air-intake system according to one of the preceding claims, **characterized in that** the intake container (16) is formed in two parts.

6. Air-intake system according to one of the preceding claims, **characterized in that** the device (48) for optionally opening or closing this larger diffuser (30) is a control flap.

7. Air-intake system according to one of the preceding claims, **characterized in that** a control device is provided which opens and closes the device (48) in order to optionally open or close the diffuser (30) as a function of the rotational speed of the internal combustion engine (10).

8. Air-intake system according to one of the preceding claims, **characterized in that** an intake pipe (32) which is connected to the raw air inlet volume (26) is provided.

9. Air-intake system according to Claim 8, **characterized in that** a snow filter (34) is provided in the intake pipe (32).

10. Air-intake system according to one of the preceding claims, **characterized in that** an intake connector (36) which is connected to the raw air inlet volume (26) is provided for preheated raw air (40) and has a flap (42) for optionally opening or closing it.

11. Air-intake system according to Claim 10, **characterized in that** an elastic means, in particular a spring, is provided which applies force to the flap (42) in the closing direction in such a way that the flap (42) opens counter to the force of the elastic means when there is a predetermined partial vacuum in the raw air intake volume (26).

12. Internal combustion engine (10), in particular for a motor vehicle, having an air-intake system, **characterized in that** the air-intake system is embodied according to at least one of the preceding claims.

13. Motor vehicle having an internal combustion engine (10) which has an air-intake system, **characterized in that** the air-intake system is embodied according to at least one of Claims 1 to 11.

## Revendications

1. Installation d'aspiration d'air pour un moteur à combustion interne (10), comprenant un filtre à air, qui présente, dans un boîtier de filtre à air (12), un espace pour l'air atmosphérique, un espace pour l'air propre relié au moteur à combustion interne (10) et un insert de filtre disposé entre l'espace pour l'air atmosphérique et l'espace pour l'air propre, l'espace pour l'air atmosphérique étant divisé au moyen d'une séparation (22) en un volume d'entrée d'air atmosphérique (26) et un volume de sortie d'air atmosphérique (24), une section transversale de passage pour l'air atmosphérique au niveau de la séparation (22) du volume d'entrée de l'air atmosphérique (26) dans le volume de sortie de l'air atmosphérique (24) pouvant être modifiée, **caractérisée en ce que** l'espace pour l'air atmosphérique est réalisé en tant que récipient d'aspiration (16) séparé du boîtier de filtre à air (12) et est disposé en amont du boîtier de filtre à air (12) et **en ce que** la séparation (22) présente au moins deux diffuseurs (28, 30) avec une section transversale d'ouverture différente, qui relient fluidiquement le volume d'entrée d'air atmosphérique (26) au volume de sortie d'air atmosphérique (24), le diffuseur (30) de plus grande section transversale d'ouverture présentant un dispositif (48) pour l'ouverture ou la fermeture sélective de ce diffuseur (30).

2. Installation d'aspiration d'air selon la revendication 1, **caractérisée en ce que** la section transversale de passage pour l'air atmosphérique peut être modifiée au niveau de la séparation (22) en fonction d'un régime du moteur à combustion interne (10).

3. Installation d'aspiration d'air selon la revendication 1 ou 2, **caractérisée en ce que** la section transversale de passage pour l'air atmosphérique peut être modifiée au niveau de la séparation (22) en fonction d'un régime du moteur à combustion interne (10) de telle sorte que pour de faibles régimes du moteur à combustion interne (10), la section transversale de passage soit réduite et que pour de grands régimes du moteur à combustion interne (10), la section transversale de passage soit agrandie.

4. Installation d'aspiration d'air selon l'une quelconque des revendications précédentes, **caractérisée en ce que** la séparation (22) est réalisée sous forme de paroi de boîtier du boîtier de filtre à air (12).

5. Installation d'aspiration d'air selon l'une quelconque des revendications précédentes, **caractérisée en ce que** le récipient d'aspiration (16) est réalisé en deux parties.

6. Installation d'aspiration d'air selon l'une quelconque des revendications précédentes, **caractérisée en ce que** le dispositif (48) pour l'ouverture ou la fermeture sélective de ce plus grand diffuseur (30) est un volet de commutation.

7. Installation d'aspiration d'air selon l'une quelconque des revendications précédentes, **caractérisée en ce que** l'on prévoit un appareil de commande qui ouvre et ferme le dispositif (48) pour l'ouverture ou la fermeture sélective du diffuseur (30) en fonction du régime du moteur à combustion interne (10).

8. Installation d'aspiration d'air selon l'une quelconque des revendications précédentes, **caractérisée en ce que** l'on prévoit un schnorchel d'aspiration (32) relié au volume d'entrée d'air atmosphérique (26).

9. Installation d'aspiration d'air selon la revendication 8, **caractérisée en ce que** l'on dispose dans le schnorchel (32) un filtre à neige (34).

10. Installation d'aspiration d'air selon l'une quelconque des revendications précédentes, **caractérisée en ce que** l'on prévoit une tubulure d'aspiration (36) pour de l'air atmosphérique préchauffé (40), reliée au volume d'entrée d'air atmosphérique (26), laquelle présente un volet (42) pour l'ouverture ou la fermeture sélective.

11. Installation d'aspiration d'air selon la revendication 10, **caractérisée en ce que** l'on prévoit un moyen élastique, notamment un ressort, qui sollicite le volet (42) dans la direction de fermeture avec une force telle que le volet (42) s'ouvre à l'encontre de la force du moyen élastique dans le cas d'une dépression prédéterminée dans le volume d'entrée d'air atmosphérique (26).

12. Moteur à combustion interne (10), notamment pour un véhicule automobile, comprenant une installation d'aspiration d'air, **caractérisé en ce que** l'installation d'aspiration d'air est réalisée selon au moins l'une quelconque des revendications précédentes.

13. Véhicule automobile comprenant un moteur à combustion interne (10) qui présente une installation d'aspiration d'air, **caractérisé en ce que** l'installation d'aspiration d'air est réalisée selon au moins l'une quelconque des revendications 1 à 11.
